Europäisches Patentamt

European Patent Office

Office européen des brevets

(19)

(11) Veröffentlichungsnummer: **0 198 461**

**B1**

(12) **EUROPÄISCHE PATENTSCHRIFT**

(45) Veröffentlichungstag der Patentschrift:
12.07.89

(21) Anmeldenummer: **86105107.6**

(22) Anmeldetag: **14.04.86**

(51) Int. Cl.⁴: **E 03 F 5/10,** C 02 F 11/12,
B 01 D 29/00

(54) Vorrichtung zum Sammeln und Abführen von groben Verunreinigungen aus Abwasserkanälen oder dergl.

(30) Priorität: **15.04.85 DE 3513396**

(43) Veröffentlichungstag der Anmeldung:
**22.10.86 Patentblatt 86/43**

(45) Bekanntmachung des Hinweises auf die Patenterteilung:
**12.07.89 Patentblatt 89/28**

(84) Benannte Vertragsstaaten:
**AT BE CH DE FR IT LI NL**

(56) Entgegenhaltungen:
**DE-A-1 584 982**
**FR-A-383 924**
**US-A-3 074 557**
**US-A-4 154 161**

(73) Patentinhaber: **Apparatebau- Münster,
Kaddenbusch 2, D-2211 Dägeling (DE)**

(72) Erfinder: **Münster, Walter, Mühlenkamp 7, D-2204
Krempe (DE)**

(74) Vertreter: **Struck, Willi, Dr.- Ing., Friedrich- Ebert-
Strasse 10f, D-2080 Pinneberg (DE)**

EP 0 198 461 B1

## Beschreibung

Die Erfindung betrifft eine Vorrichtung zum Sammeln und Abführen von groben Verunreinigungen insbes. aus Abwässerkanälen oder dergl.

Zum Auffangen d. h. zum Sammeln von Verunreinigungen in Gewässern, wie Kanälen und dergl. ist es bekannt, in die Kanäle Rechen einzubauen, die die Flüssigkeit durchlassen und vor denen sich die Verunreinigungen und auch sonstige Fremdkörper fangen und aufstauen. Diese Verunreinigungen werden dann von Zeit zu Zeit mit Rechenreinigungsmaschinen unterschiedlichster Bauarten von den Rechenstäben entfernt und seitlich der Gewässer auf dem Erdboden oder in bereitstehenden Containern abgelegt und schließlich abgefahren. Diese Rechen mit ihren Reinigungsvorrichtungen haben sich besters bewährt, lassen sich aber wirtschaftlich nicht in kleinen und kleinsten Abwässerkanälen einsetzen.

Für diese Zwecke wurden andere Mittel entwickelt, wie z. B. feststehende Filterscheiben oder an starr angeordneten Rechenreinigern vorbeidrehbar gelagerte Rechen, insbesondere wurden aber für solche Kanäle besondere Pressen (z. B. DE-PS-1 584 982) geschaffen; in die das von einem Rechen abgenommene Gut, d. h. ein Gemisch aus Verunrinigungen mit Wasser eingegeben und durch Auspressen weitgehend von Flüssigkeit befreit wird, die dann in das Gewässer zurückgeleitet wird, während das ausgepreßte Gut in besonderen Behältern abgelegt und abgefahren wird. Abgesehen davon, daß diese Pressen große Preßdrücke aufbringen müssen und daher sehr aufwendig und teuer sind, weisen sie noch, da sie seitlich der Gewässer aufgebaut sind, den Nachteil auf, daß besondere Mittel erforderlich sind, um ihnen das Gut-Wasser-Gemisch zuzuführen und auch, um die abgetrennte d. h. ausgepreßte Flüssigkeit in das Gewässer zurückzuführen.

Zur Vermeidung aller dieser Nachteile soll, die Aufgabe gelöst werden, auf einfachste Weise die mit dem Abwasser mitgeführten Verunreinigungen zu sammeln und mit ebenso geringem Aufwand von der Sammelstelle und aus dem Gewässer abzuführen und schließlich in einem Behälter abzulegen, mit dem die Verunreinigungen dann abgefahren werden können.

Zur Lösung, dieser Aufgabe wird dazu erfindungsgemäß eine Vorrichtung vorgeschlagen, bei der in dem Abwasserkanal ein Schott angeordnet ist, mit einer Durchtrittsöffnung für die Flüssigkeit mit den Verunreinigungen an die sich ein von Rechenstäben umgrenzter Durchströmraum anschließt, dessen hinteres freies Ende mit einem Abführrohr für die mittelsittels eines im Durchströmraum verschiebbaren Reinigungs- und Preßkolbens von den Rechenstäben abstreifbaren Verunreinigungen verbunden ist.

Der in Ruhestellung mit Abstand vor der Durchtrittsöffnung im Schott- angeordnete Reinigungs- und Preßkolben soll mittels eines an einer über T-Träger mit dem Schott und dem Abführrohr verbundenen Gurtplatte gelagerten Hydraulikzylinders verschiebbar sein.

Es hat sich als vorteilhaft erwiesen, die freien Schenkel der T-Träger im Bereich des Durchströmungsraumes als Rechenstäbe und in dem Raum zwischen der Gurtplatte und der Durchströmungsöffnung im Schott als Führung für den Reinigungsund Preßkolben auszubilden.

Zur Verbesserung des Reinigungseffektes soll der Reinigungsund Preßkolben an seinem Umfang mit die vorderen Enden der Rechenstäbe umgreifenden Nuten versehen sein. Der Durchströmraum und der darin verschiebliche Reinigungs- und Preßkolben können beliebige Form aufweisen, wie etwa quadratisch oder rechteckig sein, besonders zweckmäßig ist es aber, wenn der Durchströmraum eine runden Querschnitt aufweist und der Reinigungs- und Preßkolben ein Kreiskolben ist. Der Reinigungsund Preßkolben kann aus verschleißfestem Kunststoff ausgeführt sein, aber auch aus nichtrostendem Stahl bestehen.

Der Abstand der Rechenstäbe läßt sich auf einfache Weise verringern, wenn um den inneren Ring der Rechenstäbe ein äußerer Ring von Rechenstäben angeordnet wird, dessen Stäbe im Bereich der Lücken zwischen aen inneren Stäben liegen.

Der Raum zwischen der Gurtplatte und dem Schott soll als freier Zuströmraum für die Flüssigkeit mit den Verunreinigungen zu der Durchtrittsöffnung im Schott mit einem gegenüber dem unteren Umfang des Reinigungs- und Preßkolbens einen geringen Abstand aufweisenden Bodenblech, welches die Ansammlung von Verunreinigurgen unterhalb des Kolbens verhindern soll, ausgebildet sein.

Der vordere Teil des Abführrohres für die Verunreinigungen soll als die Rechenstäbe im Bereich ihres hinteren Endes auf einem Teil ihrer Länge umhüllendes Preßrohr ausgeführt sein. Dem Abführrohr für die Verunreinigungen soll ein zu einem Sammelbehälter führendes Leitrohr nachgeschaltet sein. Zwischen dem Abführrohr und dem Leitrohr kann im Bereich des Abwasserkanals ein Zwischenflansch mit Entwässerungsöffnungen angeordnet sein, wobei der Zwischenflansch aus einzelnen mit Entwässerungskanälen versehenen Platten mit in Ausschubrichtung der Verunreinigungen sich verringernden Bohrungsdurchmessern bestehen kann.

Bei Gut, welches sich durch die Pressung sehr stark verdichtet, kann die Abführung durch ein einfaches Leitrohr Schwierigkeiten bereiten. Es können deshalb für die Abführung des Gutes hinter der Öffnung am freien Ende des Durchströmraumes Preßwalzen angeordnet sein denen eine Reihe von in einem Förderwalzenschacht angebrachte Förderwalzen, zwischen denen das Gut geführt ist, nachgeschaltet ist. Zweckmäßig sollen die Preßwalzen und die Förderwalzen als Kamm-walzen mit ineinandergreifenden Zahnungen ausgebildet sein.

Um ein Einfrieren des Gutes im Winter zu vermeiden, sollen das Leitrohr der Abführung bzw. der Förderwalzenschacht der Abführung mit einem Wärmeisoliermantel sowie gegebenenfalls einer Heizung versehen sein.

Das Schott kann an seinem Außenrand mit einem als Verstärkung und Führung dienenden Gurtblech versehen sein, an dem an den beiden Seiten obere und untere Abstandsstücke für die Einführung des Schotts in U-förmigen Nuten in den Wänden des Abwasserkanals angeordnet sind.

Insbesondere als Frostschutz im Winter für die erfindungsgemäße Vorrichtung soll oberhalb des Abwasserkanals wenigstens im Bereich der Vorrichtung eine Abdeckplatte vorgesehen sein.

Es liegt auch im Rahmen der Erfindung, die erfindungsgemäße Vorrichtung als außerhalb des Abwasserkanals angeordnete Preßvorrichtung zu verwenden, mit dann als Einfüllraum bzw. -trichter gestaltetem Raum wischen Kolben und dem Rechen sowie am unteren Teil der Vorrichtung angebrachter Flüssigkeitssammel- und -ableiteinrichtung.

An Hand der beiliegenden Zeichnungen soll die Erfindung nachfolgend noch näher erläutert werden. Auf den Zeichnungen zeigen

Fig. 1 eine Seitenansicht auf die erfindungsgemäße Vorrichtung mit Abwasserkanal,

Fig. 2 eine Ansicht von vorn auf das Schott mit dem Durchströmkanal und auf das Leitrohr zur Abführung der Verunreinigungen,

Fig. 3 eine Ansicht von vorn auf das Schott und den Hydraulikzylinder,

Fig. 4 eine Ansicht von oben auf den Abwasserkanal mit der erfindungsgemäßen Vorrichtung,

Fig. 5 verschiedene Ausführungen des Zwischenflansches.

Fig. 6 eine Seitenansicht auf die Vorrichtung mit dem Förderwalzenschacht zur Abführung der Verunreinigungen,

Fig. 7 eine Ansicht von vorn auf das Schott und die Förderwalzen und

Fig. 8 eine Vorderansicht auf eine Preßwalze mit Rillenabschluß am Gehäuse.

In den Figuren sind gleiche Teile mit gleichen Bezugszeichen versehen.

Wie die Figuren erkennen lassen, ist in einem Abwasserkanal 10 ein Schott 11 angeordnet, welches den freien Wasserdurchfluß durch den Kanal verhindert. Das Wasser mit den Verunreinigungen ist vielmehr gezwungen, durch die im Schott befindliche Durchstrittsöffnung 12 in den an diese Öffnung anschließenden Durchströmraum 14 einzufließen und kann diesen Raum nur über die Öffnung 15 an der gegenüberliegenden Seite in Richtung auf das Rohr 17 verlassen, was, da dieses Rohr geschlossen ist, nicht weiterführt, oder zwischen den den Durchströmraum 14 umgebenden Rechenstäben 36 hindurch in den hinter dem Schott 11 liegenden Teil des Abwasserkanals 10 abfließen. Dabei bleiben dann die gröberen Verunreinigungen an den Rechenstäben 36 hängen oder vor ihnen im Durchströmraum 14 liegen. Wegen der zahlreichen Öffnungen zwischen den Rechenstäben findet das Wasser auch beistarken Verunreinigungen über längere Zeiträume immer die Möglichkeit zum Abfließen in den Abwasserkanal hinter den Schott.

Zum Entfernen der Verunreinigungen vor den Roststäben 36 wird der in seiner Ruhestellung unter Bildung eines Einströmraumes 22 weit vor der Durchtrittsöffnung 12 im Schott 11 liegende Reinigungs- und Preßkolben 18 mittels eines durch einen Flansch an einer Gurtplatte 20 gehaltenen Hydraulikzylinders 21 vorgefahren und in den Durchströmraum 14 eingeführt. Dabei schiebt er die an den Rechenstäben anhängenden Verunreinigungen vor sich her in Richtung auf das freie Ende 15 des Durchströmraumes, wobei die Verunreinigungen dann in das Abführrohr 17 eintreten. Wird der Kolben 18 zurückgeschoben sind die Rechenstäbe 36, 37 wieder frei von Verunreinigungen. Um die Reinigung sehr intensiv zu gestalten, weist der Kolben 18 Nuten 23 auf, die um die vorderen Kanten der Rechenstäbe herumgreifen.

Solange das Abführrohr 17 und die anschließenden Leitungen für die Abführung der Verunreinigungen wenig gefüllt sind, fallen die Verunreinigungen am Ende 15 des Durchströmraumens 14 mehr oder weniger ungehindert in das Abführrohr 17. Je mehr sich aber dieses Rohr undd die anschließenden Leitungen mit Verunreigungen füllen um so mehr setzen sie den nachfolgenden Verunreinigungen Widerstand entgegen, so daß schließlich bei nomalem Betrieb, wenn also alle Rohre und Leitungen mit Verunreinigungen gefüllt sind, die durch die Betätigung des Kolbens 18 immer weitergeschoben werden, der vordere Teil 16 des Abführrohres als Preßrohr wirkt, in dem eine Verdichtung der Verunreinigungen erfolgt, mit der Folge eines Auspressens der in diesen noch vorhandenen Flüssigkeit. Damit sich im Rohr 17 ansammelnde Flüssigkeit, die nicht mehr durch die Rechenstäbe zurückfließen kann, noch abgeleitet wird, ist dem Abführrohr 17 noch im Bereich des Abwasserkanals 10 ein Zwischenflansch 29 mit Entwässerungsöffnungen 34 nachgeschaltet.

Durch den Reinigungs- und Preßkolben 18 wird das aus dem Abwasser ausgeschiedene Gut über das Abführrohr 17, den Zwischenflansch 29 und das Leitrohr 26 und einen Krümmer in einen in Fig. 2 angedeuteten Sammelbehälter 25 ausgeschoben und kann dann in diesem abgefahren werden. Damit der Betrieb durch Frost möglichst wenig gestört wird, kann das oberhalb des Abwasserkanals 10 liegende Leitrohr 26 mit einer Isolierung 27, eventuell sogar mit einer Heizung 28 versehen sein. Dem gleichen Zweck dient die Abdeckplatte 33 über dem Abwasserkanal 10.

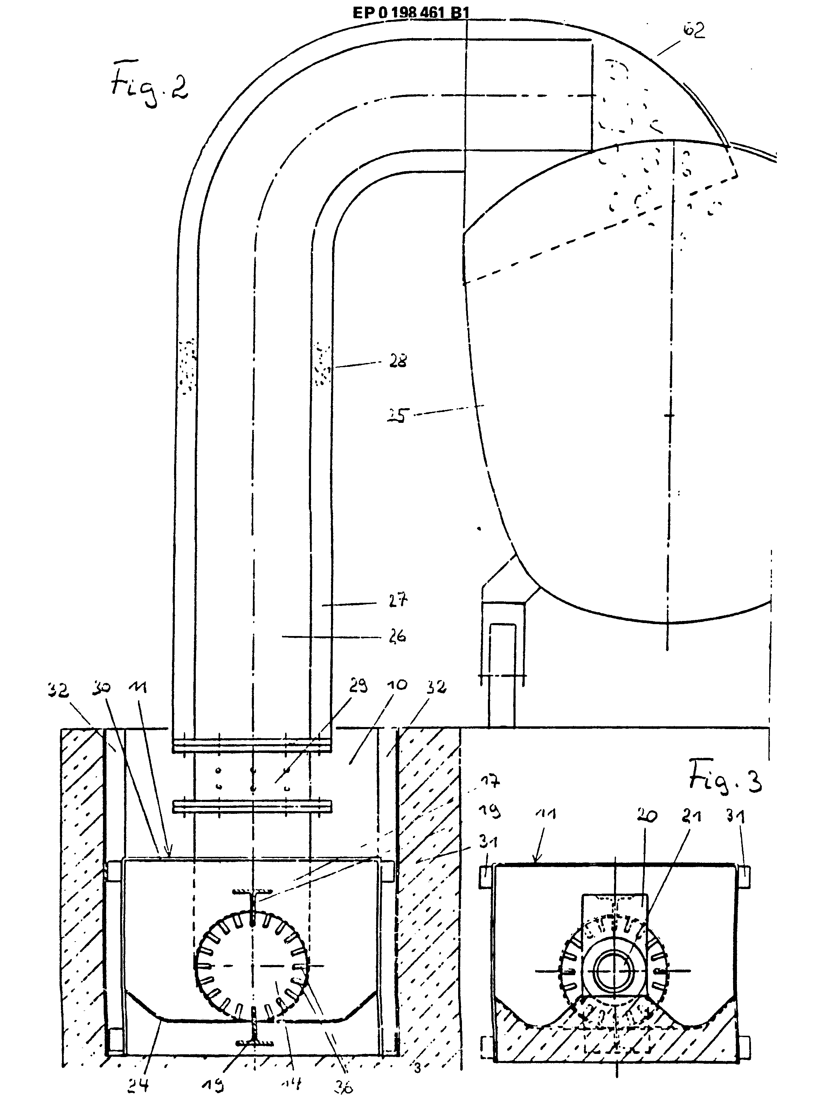

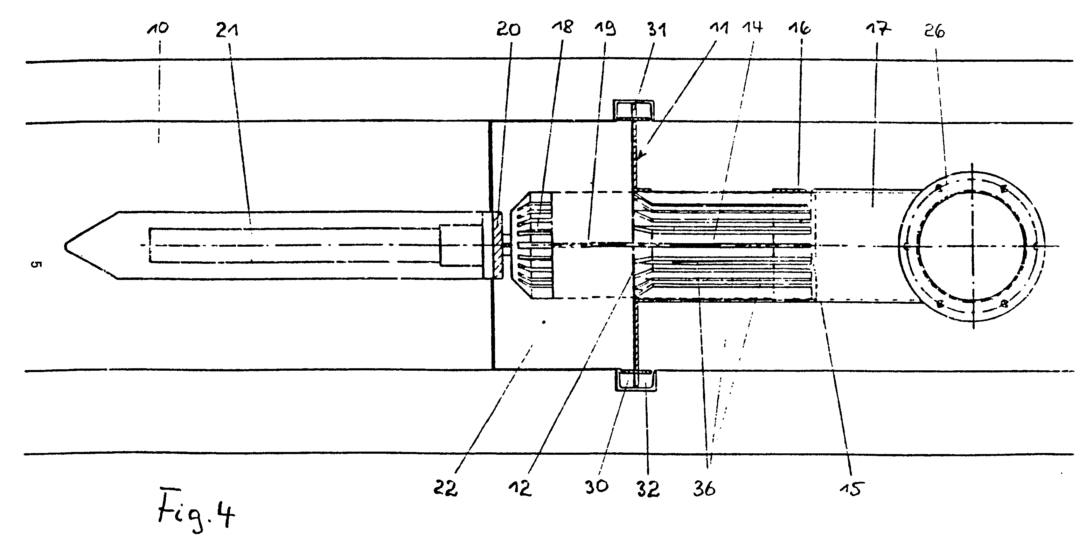

Wie insbesondere die Figuren 2 bis 4, erkennen lassen, kann das Schott 11 aus einer Blechplatte bestehen, die durch ein Gurtblech 30 in ihrem Randbereich verstärkt ist. An diesem der Führung des Schotts in U-förmigen Nuten 32 in den Seitenwänden des Abwasserkanals 10 dienenden Gurtblech 30 sind ebenfalls der Führung des Schotts dienende Abstandsstücke 31 befestigt.

Da am Schott 11 die Rechenstäbe 36 befestigt sind und über die T-Träger 19 auch die Gurtplatte 20, die den Hydraulikzylinder 21 mit dem Kolben 18 trägt und außerdem das Bodenblech und das Abführrohr 17, läßt sich nach Lösen des Leitrohres 26 bzw. des Zwischenflansche 29 die gesamte Vorrichtung in den Nuten 32 nach oben aus dem Abwasserkanal 10 herausziehen und so bequem außerhalb des Kanal warten und überholen falls das erforderlich sein sollte.

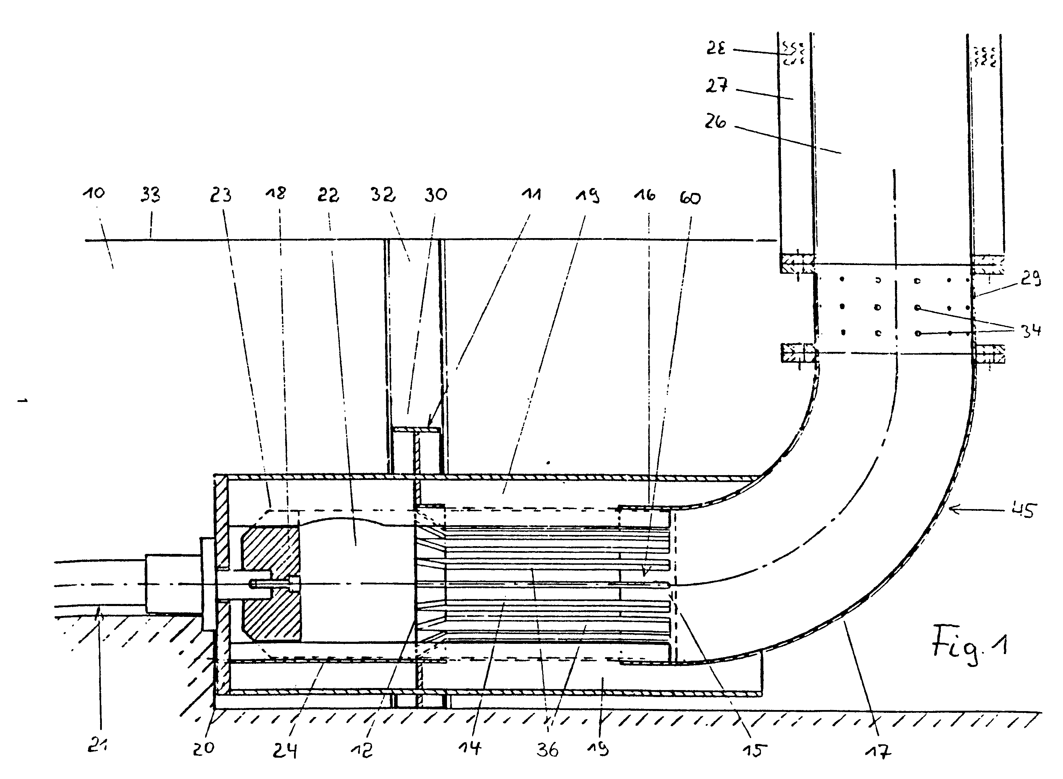

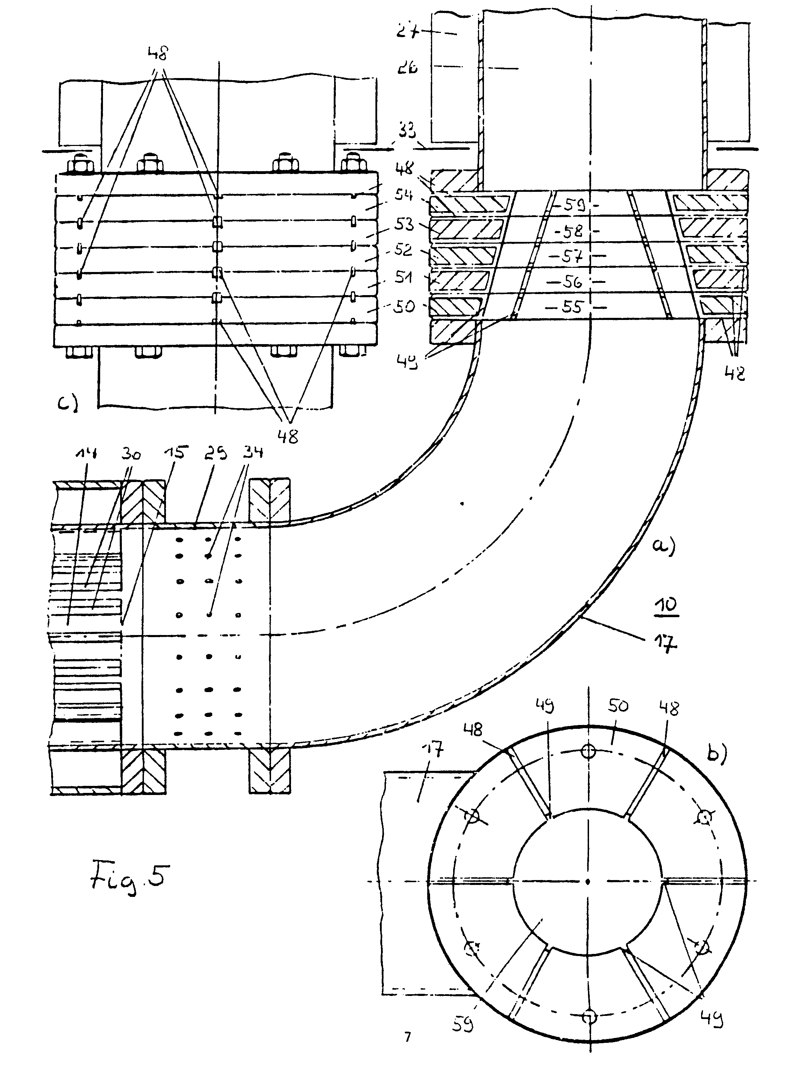

Verschiedene Ausbildungen und Anordnungen des Zwischenflansches am Abführrohr 17 läßt Fig. 5a - c erkennen. Während der Zwischenflansch 29 mit den Entwässerungsöffnungen 34 in Fig. 1 am Ende des Abführrohres angebracht ist, liegt er in der Darstellung der Fig. 5a am Anfang des Abführrohres. Am Ende des Abführrohres befindet sich in dieser Darstellung ein Zwischenflansch der aus verschiedenen stärkeren Platten 50, 51, 52, 53, 54, bei beispielsweise aus Kunststoffmaterial, zusammengestellt ist, deren Bohrungsdurchmesser 55, 56, 57, 58, 59 in Ausschubrichtung der Verunreinigungen abnimmt, so daß beim Durchtreten der Verunreinigungen durch diese Form des Zwischenflansche ein Zusammenpressen der Verunreinigungen mit der Folge einer weiteren Entwässerung des Gutes erfolgt. Damit die frei werdendende Flüssigkeit abfließen kann, sind in den Platten zu deren Oberflächen hin offene und damit beim Ausbau der Platten leicht zu reinigende Entwässerungskanäle 48, 49 angebracht.

Während Fig. 5a einen Schnitt durch die Zwischenflansche, von denen natürlich auch nur ein einzelner eingebaut sein kann, zeigt, läßt Fig. 5b eine Ansicht auf den aus Platten 50, 51, 52, 53, 54 zusammengesetzten und durch Schrauben zusammengehaltenen Zwischenflansch erkennen. In Fig. 5c ist eine Ansicht auf die oberste Platte 54 mit den Kanälen 48, 49 bei abgenommenem Leitrohr 26 wiedergegeben.

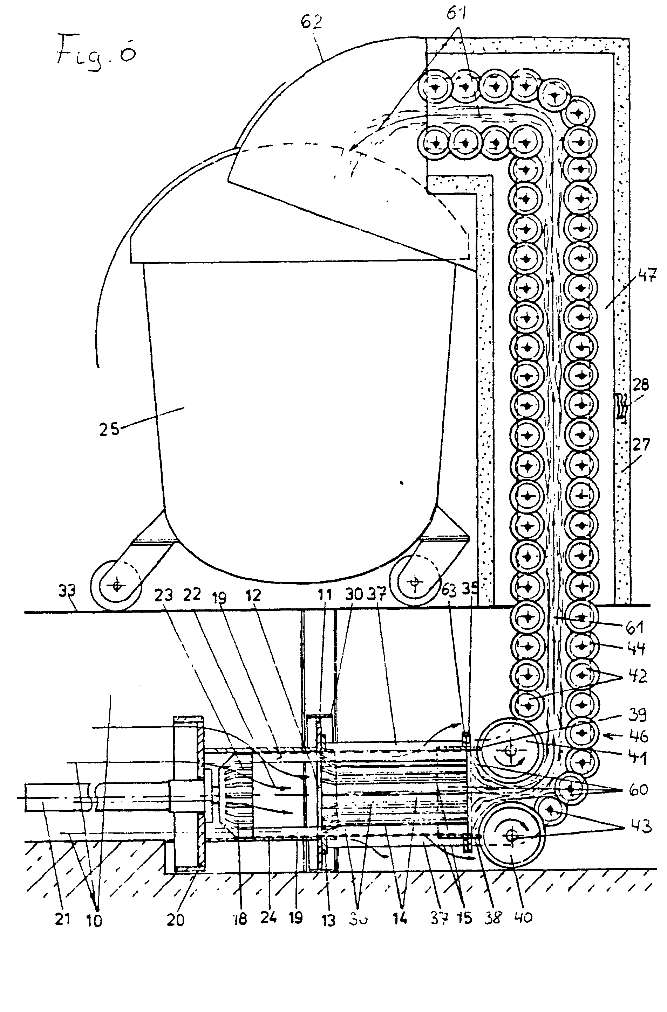

Bei dem in den Fig. 6 bis 8 dargestellten Ausführungsbeispiel der Erfindung sind der Durchströmraum 14 mit dem Preßkolben 18, sowie der Anordnung im Schott 11 im Prinzip gleich wie bei dem vorstehend beschriebenen Beispiel. Hier sind aber dem Durchströmraum 14 Preßwalzen 40, 41 nachgeschaltet, zwischen die der Kolben 18 das Gut schiebt und dabei in dem von den Walzen gebildeten Preßraum 60 zusammenpreßt. Hinter den antriebslosen Walzen 40, 41 ist ein Walzengang mit auf Achsen 43 gelagerten Förderwalzen 42 angeordnet, die ebenfalls ohne Antrieb sind und dazu dienen, die Fortbewegung des Preßgutstranges 61 vom Dreßraum 60 über die Abschlußhaube 62 in den Sammelbehälter 25 zu erleichtern.

Die Förderwalzen 42 können dabei wie in Fig. 6 dargestellt ist angeordnet sein, sie können aber auch nur in den Umlenkungen des Gutstranges vorgesehen werden oder dort auch nur in den stärker belasteten Außenbögen der Krümmungen.

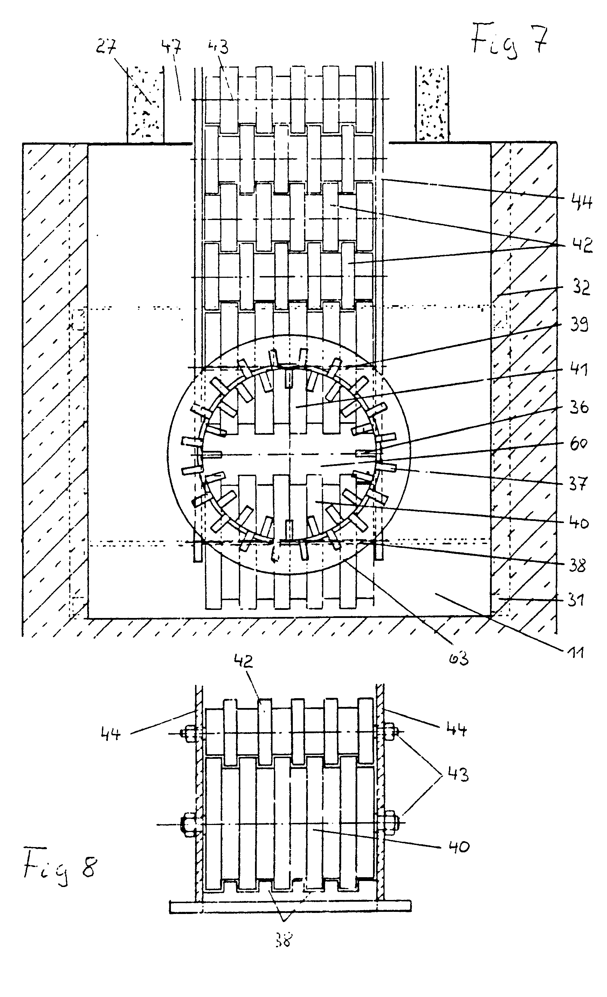

Fig. 7 läßt die Anbringung der Preßwalzen 40, 41 sowie der Förderwalzen 42 zwischen Walzenhaltern 44 im Förderwalzenschacht 47 erkennen. In dieser Figur ist auch die Anordnung des Rechenflansches mit den äußeren Rechenstäben 37, die in den Lücken der inneren Rechenstäbe 36 liegen und so die Öffnungen zwischen den Stäben auf einfache Weise verkleinern, dargestellt.

Man erkennt aus Fig. 7 sowie der Fig. 8 auch die kammartige Ausbildung der Walzen 40, 41 und 42, durch die eine gewisse Selbstreinigung dieser Walzen erreicht wird. Am Gehäuse ist wie in Fig. 8 unten angedeutet ist, ein Rillenabschluß 38, 39 oben und unten vorgesehen, um auch hier eine ausreichende Abdichtung gegen den Durchtritt von Gutteilen zu gewährleisten.

## Patentansprüche

1. Vorrichtung zum Sammeln und Abführen von groben Verunreinigungen insbes. aus Abwässerkanälen oder dergl., gekennzeichnet durch ein in dem Abwasserkanal (10) angeordnetes Schott (11) mit einer Durchtrittsöffnung (12) für die Flüssigkeit mit den Verunreinigungen, an die sich ein von Rechenstäben (36, 37) umgrenzter Durchströmraum (14) anschließt, dessen hintere freie Öffnung (15) mit einer Abführung (45, 46) für die mittels eines im Durchströmraum verschiebbaren Reinigungs- und Preßkolbens (18) von den Rechenstäben abstreifbaren Verunreinigungen verbunden ist.

2. Vorrichtung nach Anspruch 1, dadurch gekennzeichnet, daß der in der Ruhestellung mit Abstand vor der Durchtrittsöffnung (12) im Schott (11) angeordnete Reinigungs- und Preßkolben (18) mittels eines an einer über T-Träger (19) mit dem Schott und der Abführung verbundenen Gurtplatte (20) gelagerten Hydraulikzylinders (21) verschiebbar ist.

3. Vorrichtung nach Anspruch 2, dadurch gekennzeichnet, daß die freien Schenkel der T-Träger (19) im Bereich des Durchströmraumes (14) als Rechenstäbe und in dem Raum (22) zwischen der Gurtplatte (20) und der Durchtrittsöffnung (12) im Schott (11) als Führung für den Reinigungs- und Preßkolben (18) ausgebildet sind.

4. Vorrichtung nach Anspruch 1 bis 3, dadurch gekennzeichnet, daß der Reinigungs- und Preßkolben (18) an seinem Umfang mit die vorderen Enden der Rechenstäbe (36) umgreifenden Nuten (23) versehen ist.

5. Vorrichtung nach Anspruch 1 bis 4, dadurch gekennzeichnet, daß der Durchströmraum (14) einen runden Querschnitt mit in Form eines Kreisringes angeordneten Rechenstäben (36) aufweist und der Reinigungs- und Preßkolben (18) ein Kreiskolben ist.

6. Vorrichtung nach Anspruch 1 bis 5, dadurch gekennzeichnet, daß der Reinigungs- und Preßkolben (18) aus verschleißfestem Kunststoff ausgeführt ist.

7. Vorrichtung nach Anspruch 1 bis 5, dadurch gekennzeichnet daß der Reinigungs- und Preßkolben (18) aus nichtrostendem Stahl besteht.

8. Vorrichtung nach Anspruch 1 bis 7, dadurch gekennzeichnet, daß um den inneren Ring der Rechenstäbe (36) ein äußerer Ring von Rechenstäben (37) angeordnet ist, dessen Stäbe im Bereich der Lücken zwischen den inneren Stäben angebracht sind.

9. Vorrichtung nach Anspruch 2 bis 8, dadurch gekennzeichnet, daß der Raum (22) zwischen der Gurtplatte (20) und dem Schott (11) als freier Zuströmraum für die Flüssigkeit mit den Verunreinigungen zu der Durchtrittsöffnung (12) im Schott mit einem gegenüber dem unteren Umfang des Reinigungs- und Preßkolbens (18) einen geringeren Abstand aufweisenden Bodenblech (24) ausgebildet ist.

10. Vorrichtung nach Anspruch 1 bis 9, dadurch gekennzeichnet, daß bei der Abführung (45) für das Gut der vordere Teil (16) eines Abführrohres (16, 17) für die Verunreinigungen als die Rechenstäbe (36) im Bereich ihres hinteren Endes auf einem Teil ihrer Länge umhüllendes Preßrohr ausgeführt ist.

11. Vorrichtung nach Anspruch 10, dadurch gekennzeichnet, daß dem Abführrohr (16, 17) für die Verunreinigungen ein zu einem Sammelbehälter (25) führendes Leitrohr (26) nachgeschaltet ist.

12. Vorrichtung nach Anspruch 10 und 11, dadurch gekennzeichnet, daß zwischen dem Abführrohr (16, 17) und dem Leitrohr (26) im Bereich des Abwasserkanals (10) ein Zwischenflansch (29) mit Entwässerungsöffnungen (34) angeordnet ist.

13. Vorrichtung nach Anspruch 12, dadurch gekennzeichnet, daß der Zwischenflansch aus einzelnen mit Entwässerungskanälen (48, 49) versehenen Platten (50, 51, 52, 53, 54) mit in Ausschubrichtung der Verunreinigungen sich verringernden Bohrungsdurchmessern (55, 56, 57, 58, 59) besteht.

14. Vorrichtung nach Anspruch 1 bis 9, dadurch gekennzeichnet, daß bei der Abführung (46) für das Gut hinter der Öffnung (15) am freien Ende des Durchströmungsraumes (14) Preßwalzen (40, 41) angeordnet sind, denen eine Reihe von in einem Förderwalzenschacht (47) angebrachter Förderwalzen (42), zwischen denen das Gut geführt ist nachgeschaltet sind.

15. Vorrichtung nach Anspruch 14, dadurch gekennzeichnet, daß die Preßwalzen (40, 41) und die Förderwalzen (42) als Kammwalzen mit ineinandergreifenden Zahnungen ausgebildet sind.

16. Vorrichtung nach Anspruch 11 bis 15 dadurch gekennzeichnet, daß das Leitrohr (26) der Abführung (45) bzw. der Förderwalzenschacht (47) der Abführung (46) mit einem Wärmeisoliermantel (27), sowie gegebenenfalls einer Heizung (28) versehen ist.

17. Vorrichtung nach Anspruch 2 bis 16, dadurch gekennzeichnet, daß das Schott (11) an seinem Außenrand miteinem als Verstärkung und Führung dienenden Gurtblech (30) versehen ist, an dem an den beiden Seiten obere und untere Abstandsstücke (31) für die Einführung des Schotts in U-förmigen Nuten (32) in den Wänden des Abwasserkanals (10) angeordnet sind.

18. Vorrichtung nach Anspruch 1 bis 17, dadurch gekennzeichnet, daß oberhalb des Abwasserkanals (10) wenigstens im Bereich der Vorrichtung nach Anspruch 1 bis 16, eine Abdeckplatte (33) vorgesehen ist.

19. Vorrichtung nach Anspruch 1 bis 18, dadurch gekennzeichnet, daß die Vorrichtung nach Anspruch 1 bis 17, als außerhalb des Abwasserkanals angeordnete Preßvorrichtung angewendet wird, mit dann als Einfüllraum bzw. -trichter gestaltetem Raum (22), sowie am unteren Teil der Vorrichtung angebrachter Flüssigkeitssammel- und -ableiteinrichtung.

## Claims

1. A device for collecting and removing coarse solid waste matter, in particular from sewers or similar conduits, wherein a bulkhead (11) arranged in the sever (10) featuring an opening (12) for the fluid with the solid waste matter and leading into a chamber (14) fringed with rake rods (36, 37); the free opening (15) at the rear of this chamber is connected to a discharge duct (45, 46) for the solid waste matter which is scraped off the rake rods by a cleaning and compression piston (18) that moves back and forth in the chamber.

2. A device as claimed in Claim 1, wherein the cleaning and compression piston (18), which in the idle position is located at some distance in front of the opening (12) in the bulkhead (11), is caused to move back and forth by means of a hydraulic cylinder (21) mounted on a flange plate (20) which is connected to the bulkhead and the discharge duct by means of T girders (19).

3. A device as claimed in Claim 2, wherein the free webs of the T girders (19) are designed to function as rake rods in the area of the chamber (14) and as guides for the cleaning and compression piston (18) in the space between the flange plate (20) and the opening (12) in the bulkhead (11).

4. A device as claimed in Claims 1 to 3, wherein the perimeter of the cleaning and compression piston (18) is furnished with grooves (23) shaped to fit around the outer ends of the rake rods (36).

5. A device as claimed in Claims 1 to 4, wherein the chamber (14) features a round cross-section with rake rods (36) arranged ina circular ring and the cleaning and compression piston (18) is a circular piston.

6. A device as claimed in Claims 1 to 5, wherein the cleaning and compression piston (18) is made of wear-resistant synthetic material.

7. A device as claimed in Claims 1 to 5, wherein the cleaning and compression piston (18) is made of stainless steel.

8. A device as claimed in Claims 1 to 7, wherein the inner ring of rake rods (36) is surrounded by an outer ring of rake rods (37) which coincide with the gaps between the inner rake rods.

9. A device as claimed in Claims 2 to 8, wherein the space (22) between the flange plate (20) and the bulkhead (11) is designed as a free feed flow space for the fluid bearing the solid waste matter to flow to the opening (12) in the bulkhead and featuring a bottom plate (24) with a small gap between itself and the bottom edge of the cleaning and compression piston (18).

10. A device as claimed in Claims 1 to 9, wherein in the discharge duct (45) for the waste matter the front part (16) of a discharge pipe (16, 17) for the solid waste matter is designed as a compression pipe enclosing the rear end of the rake rods (36) for part of their length.

11. A device as claimed in Claim 10, wherein the discharge pipe (16, 17) for the solid waste matter leads into a conduit pipe (26) which feeds into a receiving container (25).

12. A device as claimed in claims 10 and 11, wherein an intermediate flange (29) with drainage openings (34) is located between the discharge pipe (16, 17) and the conduit pipe in the area of the sewer (10).

13. A device as claimed in Claim 12, wherein the intermediate flange (29) consists of separate plates (50, 51, 52, 53, 54) furnished with drainage channels (48, 49) with bore diameters (55, 56, 57, 58, 59) which steadily decrease in the direction in which the solid waste matter is discharged.

14. A device as claimed in Claims 1 to 9, wherein press rolls (40, 41) are arranged in the discharge duct (46) for the waste matter behind the opening (15) at the free end of the chamber (14), which rolls pass the waste matter onto a series of transport rolls (42) mounted in a transport roll shaft (47) which guide the waste matter to the receiving container.

15. A device as claimed in claim 14, wherein the press rolls (40, 41) and the transport rolls (42) are designed as comb rolls with meshing teeth.

16. A device as claimed in claims 11 to 15, wherein the conduit pipe (26) of the discharge duct (45) or the transport roll shaft (47) of the discharge duct (46) is furnished with a heat insulation jacket (27) and possibly also with a heating device (28).·

17. A device as claimed in Claims 2 to 16, wherein the perimeter of the bulkhead (11) is furnished with a stiffening flange (30) as a reinforcement and guiding element both sides of which are in turn furnished with top and bottom spacers (31) designed to slot the bulkhead into U-shaped grooves (32) in the walls of the sewer (10).

18. A device as claimed in Claims 1 to 17, wherein a cover plate (33) is provided over the sewer (10) at least in the area of the device as claimed in Claims 1 to 16.

19. A device as claimed in Claims 1 to 18, wherein the device as claimed in claims 1 to 17 is used as a press located outside the sewer with the space (22) then being designed as a filling chamber or filling funnel and with a fluid collection and discharge facility being located in the bottom part of the device.

## Revendications

1. Dispositif pour collecter et pour évacuer des pollutions grossières plus particulièrement des égouts ou semblables, caractérisé en ce qu'une cloison (11) disposée dans l'égout (10) est pourvue d'une ouverture de passage (12) du liquide chargé de pollutions et que celle-ci est suivie d'un espace d'écoulement (14) délimité par des barreaux de râteau (36, 37) dont l'ouverture arrière libre (15) est reliée à une évacuation (45, 46) des pollutions pouvant être enlevées des barreaux de râteau au moyen d'un piston de nettoyage et de compression (18) monté de façon déplaçable dans l'espace d'écoulement.

2. Dispositif selon la revendication 1 caractérisé en ce que le piston de nettoyage et de compression (18) disposé en position de repos à une certaine distance devant l'ouverture de passage (12) dans la cloison (11) est déplaçable par un cylindre hydraulique (21) logé sur une semelle de recouvrement (20) reliée au moyen de supports en T (19) à la cloison et à l'évacuation.

3. Dispositif selon la revendication 2 caractérisé en ce que les branches libres des supports en T (19) font office de barreaux de râteau dans la zone de l'espace d'écoulement (14) et de guidage du piston de nettoyage et de compression (18) dans l'espace (22) entre l'ouverture de passage (12) de la cloison (11).

4. Dispositif selon l'une des revendications 1 à 3 caractérisé en ce que le piston de nettoyage et de compression (18) est pourvu, sur son pourtour, de rainures (23) entourant les extrémités avant des barreaux de râteau (36).

5. Dispositif selon l'une des revendictions 1 à 4 caractérisé en ce que l'espace d'écoulement (14) possède une section ronde avec des barreaux de râteau (36) disposés en forme d'anneau de cercle et que le piston de nettoyage et de compression (18) est un piston rotatif.

6. Dispositif selon l'une des revendications 1 à 5 caractérisé en ce que le piston de nettoyage et de compression (18) est exécuté en matière plastique résistant à l'usure.

7. Dispositif selon l'une des revendications 1 à 5 caractérisé en ce que le piston de nettoyage et de compression (18) est exécuté en acier inoxydable.

8. Dispositif selon l'une des revendications 1 à 7 caractérisé en ce qu'autour du cercle intérieur de barreaux de râteau (36) est disposé un cercle de barreaux de râteau (37) extérieur dont les barreaux sont montés dans la zone des espaces libres entre les barreaux intérieurs.

9. Dispositif selon l'une des revendications 2 à 8 caractérisé ce que l'espace (22) entre la semelle de recouvrement (20) et la cloison (11) est conçu en tant qu'espace d'entrée libre du liquide chargé de pollutions jusqu'à l'ouverture de passage (12) de la cloison et qu'il est pourvu d'une tôle de fond (24) disposée à une distance moins élevée par rapport au pourtour inférieur du piston de nettoyage et de compression (18).

10. Dispositif selon l'une des revendications 1 à 9 caractérisé en ce que, sur l'évacuation (45) de la matière, la partie avant (16) d'un tube d'évacuation (16, 17) des pollutions est exécutée en tant que tube de compression entourant les barreaux de râteau (36) sur une partie de leur longueur de la zone de leur extémité arrière.

11. Dispositif selon la revendication 10 caractérisé en ce qu'un tube conducteur (26) allant vers un réservoir de collecte (25) est monté en aval du tube d'évacuation (16, 17) des pollutions.

12. Dispositif selon l'une des revendications 10 et 11 caractérisé en ce qu'un flasque intermédiaire (29) pourvu d'ouvertures de décharge (34) est disposé entre le tube d'évacuation (16, 17) et le tube conducteur (26) dans la zone de l'égout (10).

13. Dispositif selon la revendication 12 caractérisé en ce que le flasque intermédiaire est constitué de plaques (50, 51, 52, 53, 54) pourvues de caniveaux (48, 49) possédant des diamètres de perçage (55, 56, 57, 58, 59) qui vont en diminuant dans la direction de sortie des pollutions.

14. Dispositif selon l'une des revendications 1 à 9 caractérisé en ce que, dans le cas de l'évacuation (46) de la matière, l'ouverture (15) sur l'extrémité libre de l'espace d'écoulemen (14) est suivie de rouleaux de compression (40, 41) en aval desquels est montée une série de rouleaux de transport (42), disposés dans un puits à rouleaux de transport (47), entre lesquels est acheminée la matière.

15. Dispositif selon la revendication 14 caractérisé en ce que les rouleaux de compression (40, 41) et les rouleaux de transport (42) sont exécutés sous forme de pignons à chevrons qui s'engrènent.

16. Dispositif selon l'une des revendications 11 à 15 caractérisé en ce que le tube conducteur (26) de l'évacuation (45) resp. que le puits à rouleaux de transport (47) de l'évacuation (46) est équipé d'une enveloppe de calorifugeage (27) ainsi qu'éventuellement d'un chauffage (28).

17. Dispositif selon l'une des revendications 2 à 16 caractérisé en ce que la cloison (11) est pourvue, sur son bord extérieur, d'une semelle (30) faisant office de renforcement et de guidage sur les deux côtés de laquelle sont disposées des pièces d'écartement supérieures et inférieures (31) servant à l'introduction de la cloison dans les rainures en U (32) prévues dans les parois de l'égout (10).

18. Dispositif selon l'une des revendications 1 à 17 caractérisé en ce qu'au-dessus de l'égout (10) est prévue une plaque de recouvrement (33) et ce, au moins dans la zone du dispositif selon l'une des revendications 1 à 16.

19. Dispositif selon l'une des revendications 1 à 18 caractérisé en ce que le dispositif selon l'une des revendications 1 à 17 est utilisé à l'extérieur de l'égout en tant que dispositif de compression dont l'espace (22) est dans ce cas conçu en tant qu'espace de remplissage resp. en tant qu'entonnoir de remplissage et dont la partie inférieure est dotée un dispositif de collecte et d'évacuation de liquide.

Fig. 1

Fig. 2

Fig. 3

Fig.4

Fig. 5

Fig. 6

Fig 7

Fig 8